# EUROPÄISCHE PATENTSCHRIFT

(11) **EP 1 813 038 B1**
(45) Veröffentlichungstag und Bekanntmachung des Hinweises auf die Patenterteilung: **13.05.2009**
(21) Anmeldenummer: 05816407.0
(22) Anmeldetag: 14.12.2005
(51) Int. Cl.: H04B 13/02

(54) **SCHALTUNG UND VERFAHREN ZUM ERZEUGEN EINES STROMPULSES IN EINEM WELLENLEITER**
CIRCUIT AND METHOD FOR GENERATING A CURRENT PULSE IN A WAVEGUIDE
CIRCUIT ET PROCEDE POUR PRODUIRE UNE IMPULSION DE COURANT DANS UN GUIDE D'ONDES

(30) Priorität: 16.12.2004 DE 102004060577
(43) Veröffentlichungstag der Anmeldung: 01.08.2007
(73) Patentinhaber: Fraunhofer-Gesellschaft zur Förderung der angewandten Forschung e.V., 80686 München (DE)
(72) Erfinder: HACKNER, Michael, 93155 Hemau OT Haag (DE); HERZER, Elmar, 91052 Erlangen (DE)
(74) Vertreter: Stöckeler, Ferdinand
(86) Internationale Anmeldenummer: PCT/EP2005/013451
(87) Internationale Veröffentlichungsnummer: WO 2006/063818

(56) Entgegenhaltungen:
- EP-A- 0 356 741
- US-A- 3 080 537
- US-A- 3 484 785
- US-A- 4 071 714

## Beschreibung

Die vorliegende Erfindung bezieht sich im allgemeinen auf eine Wellenleitertreiberschaltung zum Erzeugen eines Strompulses in einem Wellenleiter sowie auf ein Verfahren zum Erzeugen eines solchen Strompulses, im speziellen auf eine Wellenleitertreiberschaltung und eine Verfahren zum Erzeugen eines Strompulses in einem Wellenleiter zur Anwendung in einer Vorrichtung zur magnetostriktiven Positionsmessung.

In vielen Anwendungen ist es wünschenswert, einen möglichst steilflankigen Strompuls mit einer vorgegebenen Stromamplitude in einen Wellenleiter einzuprägen. Dies ist beispielsweise bei der magnetostriktiven Positionsmessung zweckdienlich. Bei dieser Methode zur Positionsmessung wird ein tangential vormagnetisierter Draht oder ein tangential vormagnetisiertes Rohr durch einen axial magnetisierten Positionsgeber mechanisch über Magnetostriktion vorgespannt. Durch einen elektrischen Strom-Puls, der durch den Draht oder durch das Rohr geschickt wird, wird an dem Ort des magnetischen Positionsgebers eine Schallwelle ausgelöst, die an dem Draht oder Rohr entlangläuft. Diese mechanische Welle lenkt an dem Ort der Wellenfront die tangentialen E-lementar-Magnete aus, was zu einer magnetischen Welle entlang des Drahts bzw. Rohrs führt, die sich zusammen mit der Schallwelle ausbreitet. An dem Ende der Anordnung angelangt, wird die magnetische Welle mit Hilfe einer Spule detektiert. Die Zeit zwischen dem Initial-Strom, der in den Draht bzw. in das Rohr eingeprägt wurde, und der Detektion der magnetischen Welle in der Spule, ist ein sehr präzises Maß für die Position des Geber-Magneten, die bei bisherigen Systemen bis auf wenige µm genau bestimmt werden kann.

Eine der Herausforderungen bei der magnetostriktiven Positionsmessung ist die Einprägung eines steilflankigen Stromimpulses in den verwendeten Wellenleiter, d.h. in den tangential vormagnetisierten Draht bzw. in das vormagnetisierte Rohr. Zur Einprägung des Stroms wurden bei bisherigen Lösungen diskret mit MOS-Transistoren realisierte Stromquellen verwendet, die ein- und ausschaltbar waren. Die Versorgungsspannung beträgt bei solchen herkömmlichen Schaltungsanordnungen in der Regel zwischen 5 Volt und 40 Volt. Wie schnell der Strom seinen Endwert erreicht, hängt bei solchen Anordnungen nicht nur davon ab, wie schnell das Gate des geschalteten Transistors die "Ein"-Spannung erreicht, sondern auch von dem Einschwingverhalten der Mess-Strecke. Die Mess-Strecke ist für schnelle Vorgänge vor allem durch ihre Wellenleiter-Eigenschaften definiert. Aufgrund des oftmals hohen elektrischen Wellenwiderstands des eingesetzten Leiters bzw. der eingesetzten Leiter braucht der Strom bei kleinen Versorgungsspannungen sehr lange, bis er den Endwert von ca. 1 bis 3 Ampere erreicht. Bei einer Versorgungsspannung von 5 Volt und einem Wellenwiderstand des verwendeten Leiters von beispielsweise 100 Ohm kann bei ideal schnellem Einschalten des Transistors in dem ersten Moment nach dem Einschalten nur ein Strom von 5 V/100 Ohm = 50 mA in den Leiter eingeprägt werden. Dann muss sich die elektrische Welle zunächst entlang des Leiters ausbreiten. An dem Ende der Leitung bzw. des Leiters befindet sich ein Kurzschluss, der erst den hohen Stromfluss ermöglicht. An diesem wird die Welle reflektiert, und nach dem Rücklaufen der Welle bis zu dem Anfang des Leiters können weitere 50 mA eingeprägt werden. Der Strom erhöht sich demnach mit der Zeit in Abhängigkeit von der Leitungslänge und der zur Verfügung stehenden Versorgungsspannung.

Das entsprechende Verhalten ist im Übrigen in Einklang mit der Beobachtung, dass eine kurzgeschlossene Leitung für nicht allzu hohe Frequenzen, bei denen die elektrische Länge der Leitung deutlich kleiner als ein Viertel der Wellenlänge ist, als Induktivität angesehen werden kann. Eine Induktivität aber verzögert den Anstieg eines Stromflusses.

Eine Verbesserung der Anstiegs-Geschwindigkeit des Strompulses kann dadurch erreicht werden, dass eine höhere Versorgungsspannung verwendet wird, die es ermöglicht, schon in einem ersten Schritt die volle End-Höhe des Strompulses zu erreichen. Bei einem Wellenwiderstand von 220 Ohm und einem Strom-Endwert von 1 Ampere ist dazu eine Versorgungsspannung von 220 Volt nötig. Diese muss zusätzlich zu den vorhandenen Versorgungsspannungen der restlichen Elektronik erzeugt werden. Dies bedeutet einen deutlich erhöhten Aufwand an Bauteilen, die den Platzbedarf erhöhen und deutliche Mehrkosten verursachen.

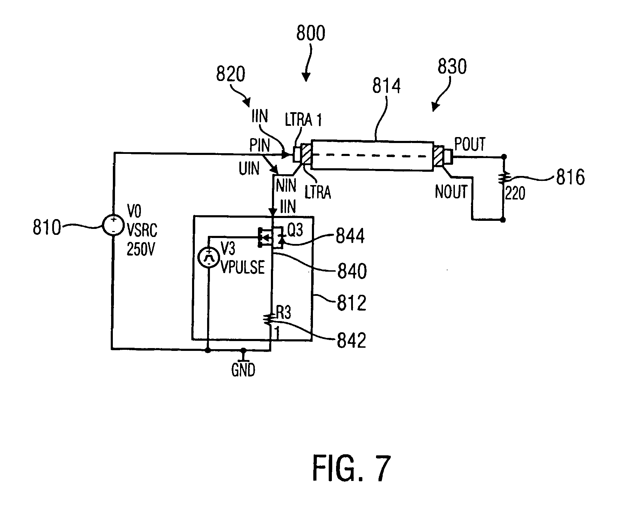

Fig. 7 zeigt ein Schaltbild einer Schaltungsanordnung zum Einprägen eines Strompulses in einen Wellenleiter gemäß dem Stand der Technik. Die Schaltungsanordnung ist in ihrer Gesamtheit mit 800 bezeichnet. Die Schaltungsanordnung 800 umfasst eine Spannungsquelle 810, eine Schalt- und Regelanordnung 812, einen Wellenleiter 814 sowie einen Wellenleiterabschluss 816. Der Wellenleiter umfasst hierbei einen ersten Leiter LTRA1 sowie einen zweiten Leiter LTRA. Der erste Leiter LTRA1 ist an dem ersten Ende 820 des Wellenleiters 814 mit dem positiven Anschluss der Spannungsquelle 810 gekoppelt. Der zweite Leiter LTRA des Wellenleiters 814 ist an dem ersten Ende 820 mit der Schalt- und Regelschaltung 812 gekoppelt. An dem zweiten Ende 830 des Wellenleiters 814 sind der erste Leiter LTRA1 und der zweite Leiter LTRA des Wellenleiters über einen Wellenleiterabschluss 816 miteinander verbunden. Der Wellenleiterabschluss 816 ist hierbei durch einen Widerstand gebildet. Die Schalt- und Regelschaltung 812 umfasst einen n-Kanal MOS-Feldeffekttransistor 840 vom Anreicherungstyp, dessen Drain-Source-Strecke in Serie mit einem Widerstand 842 zwischen den Anschluss NIN des zweiten Leiters LTRA des Wellenleiters 814 und das Bezugspotential GND geschaltet ist. Parallel zu der Drain-Source-Strecke des n-Kanal MOS-Feldeffekttransistors ist ferner eine Schutzdiode 844 geschaltet, die den Transistor vor großen negativen Spannungsspitzen beim Ausschalten schützt. Der Gate-Anschluss des Transistors wird ferner von einer gepulsten Spannungsquelle 846 angesteuert.

Basierend auf der strukturellen Beschreibung der Schaltungsanordnung 800 gemäß dem Stand der Technik wird im Folgenden auf die Funktionsweise derselben eingegangen. Ausgegangen wird hierbei von einem stromlosen Zustand des Wellenleiters 814. D.h., die Schalt- und Regelschaltung 812 war für einen hinreichend langen Zeitraum ausgeschaltet bzw. in einem hochohmigen Zustand. Wird die Schalt- und Regelschaltung 812 nun durch geeignete Ansteuerung durch die Spannungsquelle 846 aktiviert, d.h. wird der n-Kanal MOS-Feldeffekttransistor 840 in einen leitenden Zustand versetzt, so liegt über den Anschlüssen PIN und NIN an dem ersten Ende 820 des Wellenleiters 814 eine Spannung UIN an, die mit dem entsprechenden Eingangsstrom IIN in dem Zusammenhang UIN = ZW*IIN steht. ZW ist hierbei der Wellenwiderstand des Wellenleiters 814. Der Strom IIN kann durch die Schalt- und Regelschaltung 812 in Abhängigkeit von dem von der Spannungsquelle 846 bestimmten Gate-Potential des n-Kanal MOS-Feldeffekttransistors 840 geregelt werden. Weist beispielsweise die Spannungsquelle 810 eine Spannung von 250 Volt auf, und ist ferner der Wellenwiderstand des Wellenleiters 814 gleich 220 Ohm, so beträgt die Eingangsspannung UIN des Wellenleiters bei einem Strom IIN von 1 Ampere UIN = 220 Volt. Damit fällt über der Schalt- und Regelschaltung 812 eine Spannung von 30V=250V-220V ab.

Ist der Wellenleiter wie vorstehend beschrieben durch einen Wellenleiterabschluss 816 Impedanz-richtig abgeschlossen, so treten an dem zweiten Ende 830 des Wellenleiters 814 keine Signalreflexionen auf. Der Stromfluss durch den Wellenleiter 814 beträgt somit bis zu dem Abschalten des Stromflusses näherungsweise zeitunabhängig 1 Ampere, wobei vorausgesetzt wird, dass die Schalt- und Regelschaltung 812 eine stabile Regelung des Stromflusses übernimmt.

Der Stromfluss kann bei geeigneter Ansteuerung des n-Kanal MOS-Feldeffekttransistors 840 durch die Spannungsquelle 846 ebenso unterbrochen werden. Durch den Impedanz-richtigen Abschluss der Übertragungsleitung 840 treten hierbei keine Signalreflexionen auf, und der Wellenleiter 814 ist eine Signallaufzeit nach dem Ausschalten des n-Kanal MOS-Feldeffekttransistors 840 stromlos.

Die herkömmliche Schaltungsanordnung 800 gemäß dem Stand der Technik weist eine Reihe von Nachteilen auf. So muss für gebräuchliche Wellenleiterimpedanzen (z. B. 220 Ohm) und technisch übliche Ströme (z. B. 1 Ampere) die Spannungsquelle 810 eine sehr hohe Spannung (z. B. 250 Volt) aufweisen. Dies ist technisch sehr ungünstig, da eine solche Spannung in den gebräuchlichen Systemen nicht direkt zur Verfügung steht und extra erzeugt werden muss, was einen ganz erheblichen Realisierungsaufwand mit sich bringt. Ferner weisen herkömmliche Schaltungsanordnungen den Nachteil auf, dass das zweite Ende 830 des Wellenleiters 814 mit einem Widerstand 816 abgeschlossen ist. Die Abschlusswiderstand wird in einem quasi-stationären Zustand von dem gleichen Strom durchflossen wie der Wellenleiter 814. Dadurch wird in dem Abschlusswiderstand 816 eine erhebliche Verlustleistung erzeugt. Diese ist sehr schwer abzuführen und verringert im Übrigen den Wirkungsgrad der Schaltungsanordnung stark, so dass sich die Leistungsaufnahme einer gesamten Messanordnung stark erhöht.

Die EP 0 356 741 A1 beschreibt ein Verfahren und eine Vorrichtung zur Übertragung von Messungen durch ein Metallrohr. Bei dem Konzept ist es vorgesehen, eine Übertragung von einem zentralen Bereich durch ein normales Eisenrohr und seine Abzweigungen durchzuführen. Ein kodiertes Signal wird ausgesendet und durch einen oder mehrere Benutzer empfangen. Die Benutzer empfangen das Signal mit ihrem eigenen Code, den sie gespeichert haben. Wenn das Signal identifiziert ist, betreiben die Empfänger einen Leser, der eine Messeinrichtung ausliest. Die Benutzer senden den Auslesewert zu dem zentralen Bereich, wiederum durch das Eisenrohr und seine Abzweigung, wobei dasselbe Verfahren verwendet wird wie für die Aussendung des codierten Signals. In dem zentralen Lieferbereich wird eine Aussendung einer Mehrzahl von codierten Signalen vorgenommen, wobei jedes der Signale einem Benutzer entspricht, der an dem zentralen Versorgungsbereich angeschlossen ist.

Eine Sendespule und eine Empfangs-Spule sind in dem zentralen Bereich eines Gebäudes angeordnet. Die Sende-Spule und die Empfangs-Spule sind um ein normales Gaszuleitungsrohr installiert. Die Sende-Spule wird durch einen elektronischen Apparat gesteuert, der eine Serie von Impulsen durch die Sende-Spule aussendet, um eine Code-Folge zu erhalten.

Es ist somit die Aufgabe der vorliegenden Erfindung, eine Wellenleitertreiberschaltung sowie ein Verfahren zum Erzeugen eines Strompulses in einem Wellenleiter zu schaffen, die es ermöglichen, auf die Verwendung einer Gleichspannungsquelle mit einer hohen Spannung zu verzichten.

Diese Aufgabe wird durch eine Wellenleitertreiberschaltung gemäß Anspruch 1 und ein Verfahren zum Erzeugen eines Strompulses in einem Wellenleiter gemäß Anspruch 11 gelöst.

Die vorliegende Erfindung schafft eine Wellenleitertreiberschaltung zum Erzeugen eines Strompulses in einem Wellenleiter mit einer Spannungsquelle zum Liefern einer Gleichspannung, einer Drossel, deren erster Anschluss mit einem ersten Anschluss der Spannungsquelle gekoppelt ist, einem ersten Schalter, dessen erster Anschluss mit einem zweiten Anschluss der Drossel gekoppelt ist, und dessen zweiter Anschluss mit einem zweiten Anschluss der Spannungsquelle gekoppelt ist, dem Wellenleiter, dessen erster Anschluss an einem ersten Wellenleiterende mit dem ersten Anschluss des ersten Schalters gekoppelt ist, und dessen zweiter Anschluss an dem ersten Wellenleiterende mit dem zweiten Anschluss der Spannungsquelle gekoppelt ist, und einer Steuereinrichtung, die ausgelegt ist, den ersten Schalter zu öffnen und zu schließen, um an den Anschlüssen an dem ersten Wellenleiterende einen Strompuls zu erzeugen.

Ferner schafft die vorliegende Erfindung ein Verfahren zum Erzeugen eines Strompulses in einem Wellenleiter, der mit einem Anschluss einer Induktivität gekoppelt ist, wobei das Verfahren das Aufbauen eines Stromflusses in der Induktivität und das Übernehmen des Stromflusses in den Wellenleiter umfasst.

Es ist der Kerngedanke der vorliegenden Erfindung, dass es vorteilhaft ist, in einer Induktivität unter Verwendung einer Spannungsquelle mit einer niedrigen Spannung einen Stromfluss zu erzeugen, und dann durch Verändern eines Schalterzustands dafür zu sorgen, dass die Induktivität den Stromfluss einem Wellenleiter einprägt. Hierbei wird die grundlegende physikalische Eigenschaft einer Induktivität, eine sprungartige Veränderung des Stromflusses zu unterbinden, ausgenutzt. Während an dem mit der Induktivität gekoppelten Eingangstor des Wellenleiters zu dem Einschaltzeitpunkt der Zusammenhang zwischen Spannung und Strom nach wie vor über den Wellenwiderstand festgelegt ist, entsteht über der Induktivität eine ausreichend hohe Spannung, um den erforderlichen Strom, der gleich dem vor dem Umschalten durch die Induktivität fließenden Strom ist, in den Eingang des Wellenleiters einzuprägen. Somit ist die Bereitstellung einer hohen Gleichspannung bei einer erfindungsgemäßen Wellenleitertreiberschaltung nicht nötig. Bei herkömmlichen Schaltungen hingegen muss üblicherweise eine Gleichspannung bereitgestellt werden, die mindestens so groß wie die zum Einprägen des gewünschten Stroms an dem Wellenleitereingang benötigte Spannung ist. Es entfällt also bei Anwendung einer erfindungsgemäßen Wellenleitertreiberschaltung bzw. eines erfindungsgemäßen Verfahrens zum Erzeugen eines Strompulses in einem Wellenleiter der Aufwand zur Realisierung einer Gleichspannungsquelle mit einer hohen Ausgangsspannung. Dadurch können Bauelemente eingespart werden, und es können die Baugröße und die Kosten einer Wellenleitertreiberschaltung gegenüber herkömmlichen Schaltungen verringert werden.

Ein weiterer Vorteil einer erfindungsgemäßen Schaltung besteht darin, dass zu einem Umschaltzeitpunkt, an dem der erste Schalter von einem leitenden in einen hochohmigen Zustand versetzt wird, der in den Wellenleiter eingeprägte Strom gleich dem unmittelbar vor dem Umschalten durch die Induktivität fließenden Strom ist. Der in den Wellenleiter zu dem Umschaltzeitpunkt und kurz nach dem Umschaltzeitpunkt eingeprägte Strom ist somit wohldefiniert. Der Strom wird somit zu dem Umschaltzeitpunkt alleine durch den vorherigen Strom durch die Induktivität bestimmt und ist somit unabhängig von jedweden Stromregelschaltungen, die üblicherweise eine unvermeidbare Einschwingzeit aufweisen. Eigenschaft der Induktivität hingegen ist es, einer Veränderung des Stromes entgegenzuwirken und Schwankungen zu unterbinden. Die Flankensteilheit des Stroms ist somit bei erfindungsgemäßen Realisierungen lediglich durch parasitäre Effekte, die beim Öffnen des ersten Schalters auftreten, beschränkt. Bei herkömmlichen Realisierungen hingegen ist eine Stromregelschaltung, bei der ein Transistor eingeschaltet wird, für das Einprägen des Stromflusses in den Wellenleiter verantwortlich. Bei einer solchen herkömmlichen Schaltung ist es wesentlich problematischer, eine saubere Flanke zu erzielen, gerade wenn ein größerer Strom eingeschaltet werden muss.

Bei einem bevorzugten Ausführungsbeispiel ist der Wellenleiter Teil einer Anordnung zur magnetostriktiven Positionsbestimmung. Gerade bei einer solchen Anwendung, bei der oftmals nur eine niedrige Versorgungsspannung zur Verfügung steht, ist der Einsatz einer erfindungsgemäßen Wellenleitertreiberschaltung bzw. eines erfindungsgemäßen Verfahrens besonders vorteilhaft. Durch die Einprägung eines Strompulses mit einer hohen Stromstärke und einer sehr steilen Flanke kann die Auflösung und Empfindlichkeit einer magnetostriktiven Positionsbestimmungseinrichtung deutlich verbessert werden, während sich gleichzeitig der Schaltungsaufwand verringert.

Bei einem weiteren bevorzugten Ausführungsbeispiel umfasst die Wellenleitertreiberschaltung einen Wellenleiterabschluss, der mit einem ersten Anschluss an einem zweiten Wellenleiterende und einem zweiten Anschluss an dem zweiten Wellenleiterende gekoppelt ist, wobei der Wellenleiterabschluss durch eine Parallelschaltung eines Abschlusswiderstands und einer Abschlussinduktivität gebildet ist. Ein solcher Wellenleiterabschluss dämpft durch seinen resistiven Charakter Reflexionen an dem zweiten Wellenleiterende, während Gleichströme durch die Abschlussinduktivität kurzgeschlossen werden. Ein besonders vorteilhaftes Verhalten ergibt sich, wenn der Abschlusswiderstand an die charakteristische Impedanz des Wellenleiters angepasst ist. Durch eine derartige erfindungsgemäße Auslegung eines Wellenleiterabschlusses können in vorteilhafter Weise Reflexionen stark gedämpft werden, während für Gleichstromanteile nur äußerst geringe Verluste durch den parasitären Widerstand der Abschlussinduktivität auftreten. Bei herkömmlichen Schaltungen hingegen, die keine Induktivität aufweisen, fließen Gleichströme durch einen Abschlusswiderstand, wodurch im erheblichen Maße Leistung dissipiert wird. Somit bringt ein erfindungsgemäßer Wellenleiterabschluss eine Verbesserung des Wirkungsgrades und eine Verringerung der Verlustleistung mit sich, was die Stromaufnahme der gesamten Schaltungsanordnung sowie thermische Probleme verringert.

Bei einem weiteren bevorzugten Ausführungsbeispiel ist der Abschlussinduktivität des Wellenleiterabschlusses eine Diode parallel geschaltet, die so ausgelegt ist, dass sie bei einem Ausschaltvorgang, bei dem der Stromfluss an dem ersten Wellenleiterende unterbrochen wird, einen Strom aufnimmt, der von der Abschlussinduktivität geliefert wird. Eine solche Ausführungsform des Wellenleiterabschlusses verhindert, dass bei einem Ausschaltvorgang von der Abschlussinduktivität ein Strom in das zweite Wellenleiterende eingespeist wird. Vielmehr schließt die Abschlussdiode in diesem Fall die Abschlussinduktivität kurz, so dass ein von der Abschlussinduktivität gelieferter Strom durch die Diode fließt und nicht durch den Wellenleiter. Damit ermöglicht die Abschlussdiode ein schnelles Abschalten des Stromflusses in dem Wellenleiter.

Bei einem weiteren bevorzugten Ausführungsbeispiel der vorliegenden Erfindung ist der erste Schalter Teil einer ersten geschalteten Stromregelschaltung, die ausgelegt ist, um in Abhängigkeit von einer von der Steuereinrichtung gelieferten ersten Ansteuerspannung einen Stromfluss zu regeln oder zu unterbrechen. Die Auslegung des ersten Schalters als Teil einer geschalteten Stromregelschaltung ermöglicht es, in der ersten Induktivität einen wohl definierten Stromfluss zu erzeugen, der unabhängig von der Größe der von der Spannungsquelle gelieferten Spannung, der Größe der Induktivität und der zum Aufbau des Stromflusses durch die Induktivität zur Verfügung stehenden Zeit ist, solange sichergestellt ist, dass die Stromregelschaltung lange genug aktiv ist. Somit verbessert die beschriebene Auslegung die erfindungsgemäße Grundschaltung, bei der der Stromfluss durch die Induktivität eine Funktion der oben genannten drei Parameter Spannung, Induktivität und Zeit ist. Die präzise und geregelte Einstellung eines Stromflusses fügt daher der erfindungsgemäßen Wellenleitertreiberschaltung einen weiteren gewichtigen Vorteil hinzu.

Bei einem weiteren Ausführungsbeispiel wird eine erfindungsgemäße Wellenleitertreiberschaltung verbessert, indem der zweite Anschluss des Wellenleiters an dem ersten Wellenleiterende über eine zweite geschaltete Stromregelschaltung mit dem zweiten Anschluss der Spannungsquelle gekoppelt wird, wobei die zweite geschaltete Stromregelschaltung ausgelegt ist, um in Abhängigkeit von einer von der Steuereinrichtung gelieferten zweiten Ansteuerspannung einen Stromfluss zu regeln oder zu unterbrechen. Es ist die Aufgabe der zweiten Stromregelschaltung, den Stromfluss zu regeln, sobald die über den beiden Anschlüssen des Wellenleiters an dem ersten Wellenleiterende abfallende Spannung einen hinreichend kleinen Wert erreicht hat. Die Zeit, bis dieser kleine Spannungswert erreicht ist, ist von der Durchlaufverzögerung des Wellenleiters sowie von der Beschaltung an dem zweiten Wellenleiterende abhängig. Die zweite geschaltete Stromregelschaltung ermöglicht es somit, einen Stromfluss durch den Wellenleiter mit einer nahezu konstanten Größe über einen längeren Zeitraum aufrechtzuerhalten. Weiterhin kann die zweite geschaltete Stromregelschaltung vorteilhaft zum Ausschalten des Stromflusses durch den Wellenleiter herangezogen werden.

Daneben wird es bevorzugt, dass der erste Anschluss der Drosselspule über einen zweiten Schalter mit dem ersten Anschluss der Spannungsquelle gekoppelt ist, wobei der zweite Schalter ausgelegt ist, um die Drossel von der Spannungsquelle abzutrennen, wenn keine Energiezufuhr von der Spannungsquelle benötigt wird. Durch diese Maßnahme ist es möglich, eine Energiezufuhr zu der Drossel zu unterbinden, wenn diese noch eine hinreichende Energie in ihrem Magnetfeld gespeichert hat. Somit wird die Belastung der Spannungsquelle und damit die gesamte Leistungsaufnahme der Schaltung verringert. Weiterhin ermöglicht es der Einbau des zweiten Schalters zwischen der Spannungsquelle und der Drossel, einen Betriebszustand zu ermöglichen, in dem die Drossel ihre Energie im Wesentlichen beibehält.

Ein bevorzugtes Ausführungsbeispiel der vorliegenden Erfindung umfasst eine Diode, die als Freilaufdiode zwischen den ersten Anschluss der Drossel und den zweiten Anschluss der Spannungsquelle geschaltet ist. Eine solche Freilaufdiode verhindert, dass der Eingang der realen Spannungsquelle mit negativen Spannungen beaufschlagt wird, was zu einer Zerstörung der Spannungsquelle führen könnte.

In Verbindung mit einem dritten Schalter, der zwischen den zweiten Anschluss der Drossel und den zweiten Anschluss der Spannungsquelle geschaltet ist, kann bei geschlossenem dritten Schalter ein Stromkreis durch die Freilaufdiode, die Drossel und den dritten Schalter geschlossen werden. Fällt über dem dritten Schalter und der Freilaufdiode dabei nur eine geringe Spannung ab, so können der Stromfluss durch die Drossel und damit auch die in dieser gespeicherten magnetische Feldenergie, von Verlusten abgesehen, auf einer konstanten Größe gehalten werden. Somit kann auch dann, wenn kein Stromfluss durch den Wellenleiter benötigt wird, die Energie in der Drossel gespeichert bleiben und muss nicht abgebaut werden. Die Verwendung eines dritten Schalters ist vorteilhaft, da ein solcher bevorzugt so ausgelegt wird, dass über ihm nur eine sehr geringe Spannung abfällt. Damit unterscheidet sich der dritte Schalter von der zu diesem parallel liegenden ersten geschalteten Stromregelschaltung, die durch ihre Auslegung als Regelschaltung typischerweise größere Verluste und bei gleichem Stromfluss einen höheren Spannungsabfall aufweist.

Schließlich wird es bevorzugt, den ersten, zweiten oder dritten Schalter als Halbleiterschalter auszuführen, da dies eine kostengünstige Implementierung bei geringem Bauvolumen und hoher Lebensdauer ermöglicht.

Bevorzugte Ausführungsbeispiele der vorliegenden Erfindung werden nachfolgend Bezug nehmend auf die beiliegenden Figuren näher erläutert. Es zeigen:
- Fig. 1: ein Schaltbild einer erfindungsgemäßen Wellenleitertreiberschaltung gemäß einem ersten Ausführungsbeispiel der vorliegenden Erfindung;
- Fig. 2: ein Schaltbild einer erfindungsgemäßen Wellenleitertreiberschaltung gemäß einem zweiten Ausführungsbeispiel der vorliegenden Erfindung;
- Fig. 3: ein Schaltbild einer erfindungsgemäßen Wellenleitertreiberschaltung gemäß einem dritten Ausführungsbeispiel der vorliegenden Erfindung;
- Fig. 4: eine zeitliche Darstellung der Schaltverläufe für einen Betrieb ohne Stromerhaltungszyklus bei einer erfindungsgemäßen Wellenleitertreiberschaltung gemäß dem dritten Ausführungsbeispiel der vorliegenden Erfindung;
- Fig. 5: eine zeitliche Darstellung der Schaltverläufe für einen Betrieb mit Stromerhaltungszyklus bei einer erfindungsgemäßen Wellenleitertreiberschaltung gemäß dem dritten Ausführungsbeispiel der vorliegenden Erfindung;
- Fig. 6: ein Flussdiagramm eines erfindungsgemäßen Verfahrens gemäß einem Ausführungsbeispiel der vorliegenden Erfindung; und
- Fig. 7: ein Schaltbild einer Schaltungsanordnung zum Einprägen eines Strompulses in einen Wellenleiter gemäß dem Stand der Technik.

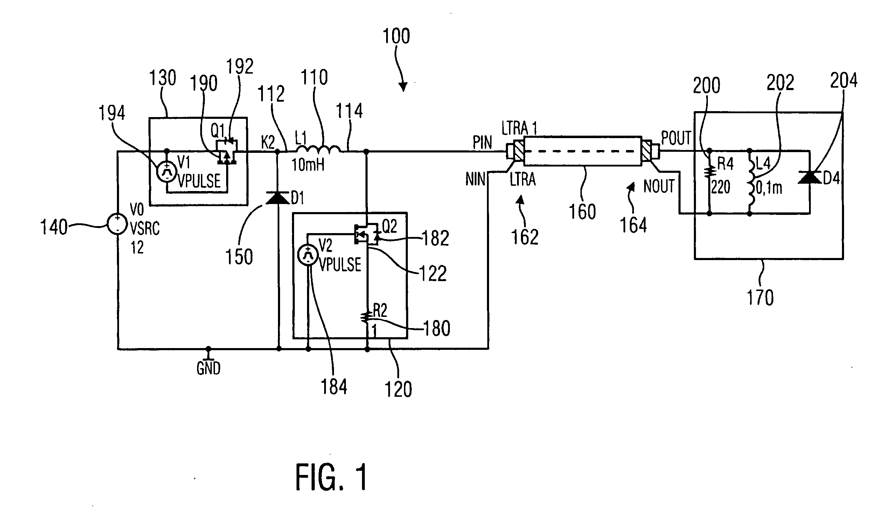

Fig. 1 zeigt ein Schaltbild einer erfindungsgemäßen Wellenleitertreiberschaltung gemäß einem ersten Ausführungsbeispiel der vorliegenden Erfindung. Die Wellenleitertreiberschaltung ist in ihrer Gesamtheit mit 100 bezeichnet. Kern der Treiberschaltung ist eine Induktivität 110, die einen ersten Anschluss 112 und einen zweiten Anschluss 114 aufweist. Der zweite Anschluss 114 der Induktivität 110 ist über eine erste geschaltete Stromregelschaltung 120 mit einem Bezugspotential GND verbunden. Die erste geschaltete Stromregelschaltung umfasst hierbei einen n-Kanal MOS-Feldeffekttransistor 122, der gleichzeitig als Regeltransistor und als erster Schalter wirkt. Der erste Anschluss 112 der Drosselinduktivität 110 ist über einen zweiten Schalter 130 mit dem positiven Anschluss einer Spannungsquelle 140 verbunden. Der negative Anschluss der Spannungsquelle 140 ist mit dem Bezugspotential GND gekoppelt. Weiterhin ist der erste Anschluss 112 der Drossel 110 über eine Freilaufdiode 150 mit dem Bezugspotential verbunden, wobei die Anode der Freilaufdiode 150 mit dem Bezugspotential GND gekoppelt ist und die Katode mit dem ersten Anschluss 112 der Drossel 110 gekoppelt ist. Weiterhin umfasst die Wellenleitertreiberschaltung 100 einen Wellenleiter 160. Dieser weist an seinem ersten Wellenleiterende 162 einen ersten Anschluss PIN auf, der mit dem zweiten Anschluss 114 der Drossel 110 gekoppelt ist. Der zweite Anschluss NIN des Wellenleiters 160 an dem ersten Wellenleiterende 162 ist mit dem Bezugspotential GND gekoppelt. Die Anschlüsse POUT und NOUT an dem zweiten Wellenleiterende 164 des Wellenleiters 160 sind mit einem Wellenleiterabschluss 170 verbunden.

Im Folgenden werden die einzelnen Baugruppen der Wellenleitertreiberschaltung 100 näher erläutert, bevor schließlich auf die Funktionsweise der Gesamtschaltung eingegangen wird.

Die erste geschaltete Stromregelschaltung 120, deren Regelstrecke zwischen den zweiten Anschluss 114 der Drossel 110 und das Bezugspotential GND geschaltet ist, weist einen n-Kanal MOS-Feldeffekttransistor 122 auf, dessen Drain-Source-Strecke von dem zu regelnden Strom durchflossen wird. Zwischen den Source-Anschluss des Transistors 122 und das Bezugspotential GND ist ein Shunt-Widerstand 180 geschalten, mit dem der Drain-Strom definiert wird. Parallel zu der Drain-Source-Strecke des n-Kanal MOS-Feldeffekttransistors 122 ist ferner eine Schutzdiode 182 geschaltet, die den Transistor vor Zerstörung im Verpolungsfall schützen kann. Der Gate-Anschluss des n-Kanal MOS-Feldeffekttransistors 122 wird von einer Spannungsquelle 184 angesteuert, die so ausgelegt ist, dass sie den n-Kanal MOS-Feldeffekttransistor 122 in einen Betriebszustand bringen kann, in dem dieser zusammen mit dem Widerstand 180 als Konstantstromquelle dient, und die weiterhin den n-Kanal MOS-Feldeffekttransistor 122 bei Bedarf in einen hochohmigen Zustand bringen kann.

Der zweite Schalter 130 umfasst einen p-Kanal MOS-Feldeffekttransistors 190 vom Anreicherungstyp, dessen Drain-Source-Strecke zwischen den positiven Anschluss der Spannungsquelle 140 und den ersten Anschluss 112 der Drossel 110 geschaltet ist. Der Drain-Source-Strecke parallel geschaltet ist eine Schutzdiode 192. Die Gate-Elektrode des p-Kanal MOS-Feldeffekttransistors 190 wird von einer Spannungsquelle 194 angesteuert, wodurch der Kanal des p-Kanal MOS-Feldeffekttransistors 190 wahlweise in einen hochohmigen oder niederohmigen Zustand gebracht werden kann.

Der Wellenleiter 160 weist einen ersten Leiter LTRA1 sowie einen zweiten Leiter LTRA auf. Der erste Leiter LTRA1 ist an dem ersten Wellenleiterende mit dem Anschluss PIN und an dem zweiten Wellenleiterende mit dem Anschluss POUT verbunden. Der zweite Leiter LTRA ist entsprechend mit dem Anschluss NIN und dem Anschluss NOUT verbunden. Die beiden Leiter sind bevorzugterweise Teil einer Vorrichtung zur magnetostriktiven Positionsmessung. Die elektrischen Leiter LTRA, LTRA1 sind hier in einer koaxialen Anordnung gezeigt. In der Praxis wird eine solche Geometrie aus Kostengründen jedoch nur selten verwendet. Vielmehr wird es in der Praxis bevorzugt, zwei parallele Drähte als Wellenleiter zu verwenden. Die vorliegende Erfindung ist jedoch unabhängig von der genauen Geometrie der Wellenleiter. Die in den Figuren verwendete Darstellung eines Wellenleiters steht daher stellvertretend für jede für eine magnetostriktive Positionsmessung verwendbare Wellenleitergeometrie.

Der Wellenleiterabschluss 170 umfasst einen Abschlusswiderstand 200, zu dem eine Abschlussinduktivität 202 und eine Abschlussdiode 204 parallel geschaltet sind. Der Abschlusswiderstand 200 ist bevorzugterweise an den Wellenwiderstand ZW des Wellenleiters 160 angepasst, d.h. der Widerstandswert des Abschlusswiderstands 200 ist gleich dem Wellenwiderstand ZW. Ein geringfügiger Unterschied zwischen der Größe des Widerstands und der Wellenwiderstand des Wellenleiters von beispielsweise etwa 20 Prozent, bezogen auf den Wellenwiderstand des Wellenleiters, ist ebenso bei einem Ausführungsbeispiel tolerierbar.

Basierend auf der strukturellen Beschreibung wird im Folgenden die Funktionsweise der erfindungsgemäßen Wellenleitertreiberschaltung 110 näher beschrieben. Der erfindungsgemäße Lösungsansatz beruht auf dem Prinzip eines Hochsetzstellers, der aus dem Bereich der Schaltregler und Schaltnetzteile bekannt ist. Daher wird im Folgenden die Funktionsweise eines Hochsetzstellers kurz beschrieben, um daraufhin zu zeigen, wie eine erfindungsgemäße Wellenleitertreiberschaltung basierend auf dem Funktionsprinzip eines Hochsetzstellers entwickelt werden kann. Bei einem Hochsetzsteller wird in einer Drossel über einen längeren Zeitraum aus einer niedrigen Versorgungsspannung ein Strom aufgebaut. Hat der Strom einen vordefinierten Wert erreicht, oder ist eine vordefinierte Zeit abgelaufen, dann wird diese Drossel bei dem Hochsetzsteller auf einen Kondensator geschaltet. Durch die Eigeninduktion der Drossel, die eine abrupte Stromänderung nicht zulässt, wird der momentan fließende Strom auf den Kondensator gepumpt. Dies ist zunächst unabhängig von der Spannung, die der Kondensator aufgrund der bereits in ihm gespeicherten Ladung bereits aufweist. Das Prinzip des Hochsetzstellers wird deshalb häufig genutzt, um Spannungen zu erzeugen, die größer als die von einer Energiequelle, z. B. einer Batterie, zur Verfügung stehende Spannung sind.

Der Kondensator wird bei einem Hochsetzsteller verwendet, um eine möglichst konstante Spannung an einem Ausgang zu erhalten, der mit dem Kondensator gekoppelt ist. Im Falle einer Stromquelle, die einen Stromimpuls in einen Wellenleiter einprägen soll, wird hingegen ein möglichst konstanter Strom benötigt. Ein solcher wird alleine durch die Drossel sichergestellt. Der bei dem Hochsetzsteller verwendete Kondensator kann daher entfallen, wenn die Drossel als Stromquelle eingesetzt wird.

Bei einer erfindungsgemäßen Wellenleitertreiberschaltung zur Einspeisung eines schnellen Strompulses in einen Wellenleiter wird daher zunächst, wie bei einem Hochsetzsteller, ein Strom in der Drossel 110 aufgebaut. Dabei ist der zweite Schalter 130 in einem niederohmigen Zustand, und die erste geschaltete Stromregelschaltung 120 beeinflusst den durch die Drossel 110 fließenden Strom. Ist ein hinreichender Stromfluss durch die Drossel 110 erreicht, oder eine vorgegebene Zeit abgelaufen, wird die Drossel bei einer erfindungsgemäßen Schaltung auf den zu speisenden Wellenleiter LTRA1 geschaltet. Dies wird erreicht, indem die erste geschaltete Stromregelschaltung 120 in einen hochohmigen Zustand geschaltet wird. Aufgrund des hohen Wellenwiderstands des Wellenleiters 160 und der Selbstinduktion der Drossel 110 entsteht die hohe Spannung, die notwendig ist, um den durch die Drossel fließenden Strom in den Wellenleiter 160 einzuspeisen, automatisch. Die vorliegende Schaltung unterscheidet sich somit von einem Hochsetzsteller dadurch, dass die Drossel nicht auf einen Kondensator geschaltet wird, sondern auf den zu speisenden Wellenleiter.

Ein besonders vorteilhaftes Schaltungsverhalten ergibt sich, wenn der elektrische Abschluss der Mess-Strecke, d.h. des Wellenleiters 160, an die Eigenschaften des Wellenleiters 160 angepasst ist. Ein Kurzschluss als Wellenleiterabschluss, wie er in anderen bisher bekannten Anordnungen verwendet wird, ist schlecht geeignet, da ein Kurzschluss den Strompuls bzw. den dazu gehörigen Spannungspuls auf der Leitung reflektiert und damit ein Einschwingverhalten verursacht, das nicht erwünscht ist. Ein einfacher Abschlusswiderstand als Wellenleiterabschluss ist ebenso ungünstig, da er zusätzliche Energieverluste verursacht, die nicht tolerierbar sind. Ein Widerstand dissipiert nämlich bei einem konstanten Stromfluss eine erhebliche Verlustleistung.

Aus diesem Grund wird bei einer erfindungsgemäßen Wellenleitertreiberschaltung ein Wellenleiterabschluss 170 verwendet, der eine Parallelschaltung bestehend aus einem Abschlusswiderstand 200, einer Abschlussinduktivität 202 und einer Abschlussdiode 204 umfasst. Um Energieverluste bei konstantem oder nahezu konstantem Stromfluss zu vermeiden, ist bei einem erfindungsgemäßen Wellenleiterabschluss 170 eine Abschlussinduktivität 202 parallel zu dem Abschlusswiderstand 200 geschaltet. Die im Vergleich zu der Drossel 110 kleine Abschlussinduktivität 202 übernimmt nach Ankunft einer elektrischen Wellenfront an dem Ende der Mess-Strecke, d.h. an dem zweiten Wellenleiterende 164 des Wellenleiters 160, nach und nach den Strom und minimiert somit die Verluste.

Soll der Strom durch den Wellenleiter wieder abgeschaltet werden, dann versucht zunächst die zu dem Abschlusswiderstand 200 parallel geschaltete Abschlussinduktivität 202 aufgrund ihrer Eigeninduktion, den Strom aufrechtzuerhalten. Dies kann durch eine Abschlussdiode 204, die hier als Bypass-Diode dient, und die parallel zu der Abschlussinduktivität 202 geschaltet ist, verhindert werden. Durch die Verwendung eines erfindungsgemäßen Wellenleiterabschlusses 170, und insbesondere durch die Integration einer Abschlussdiode 204 als Bypass-Diode, kann somit erreicht werden, dass der Wellenleiter nach maximal zwei Durchlaufzeiten im Wesentlichen stromlos ist. Eine Durchlaufzeit ist hierbei die Zeit, die eine elektrische Welle benötigt, um den Wellenleiter 160 einmal zu durchlaufen.

Die Spannungsquelle 140, die die Drossel 110 zur Stromerzeugung speist, kann über den zweiten Schalter 130 von der Drossel 110 getrennt werden, während die Drossel 110 einen Strom in den Wellenleiter 160 einspeist. Während dieser Zeit fließt der Strom über eine Diode 150, die als Freilaufdiode wirkt. Das Abschalten bzw. Abtrennen der Spannungsquelle 140 führt dazu, dass die Spannungsquelle 140 insgesamt eine geringere Leistung abgeben muss, weil sie die Schaltung nur über einen kürzeren Zeitraum speist.

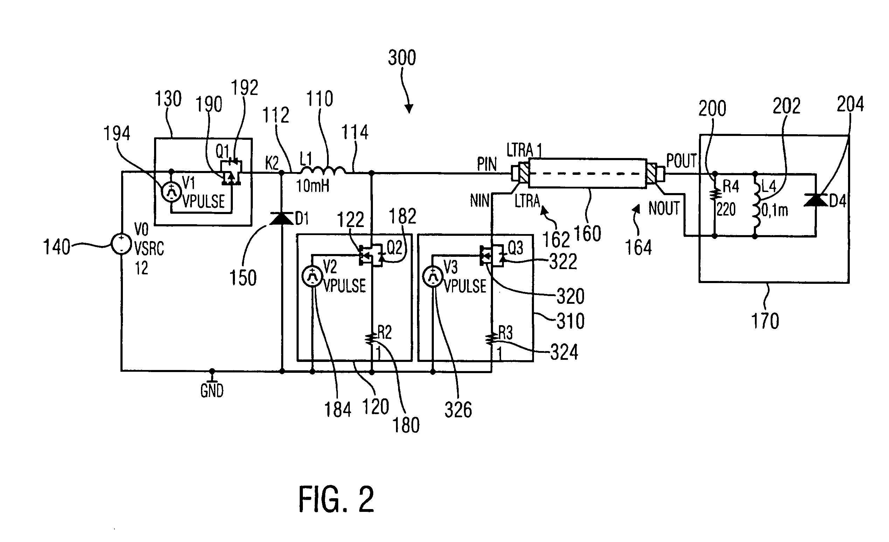

Fig. 2 zeigt ein Schaltbild einer erfindungsgemäßen Wellenleitertreiberschaltung gemäß einem zweiten Ausführungsbeispiel der vorliegenden Erfindung. Die Schaltung ist in ihrer Gesamtheit mit 300 bezeichnet. Da die Schaltung 300 gemäß dem zweiten Ausführungsbeispiel der vorliegenden Erfindung gegenüber der Schaltung 100 gemäß dem ersten Ausführungsbeispiel der vorliegenden Erfindung nur geringfügig verändert ist, sind gleiche Einrichtungen der beiden Schaltungen mit gleichen Bezugszeichen versehen und werden hier nicht separat erklärt. Vielmehr wird lediglich darauf eingegangen, worin die Weiterentwicklung der Schaltung 300 gegenüber der Schaltung 100 besteht.

So ist bei der Wellenleitertreiberschaltung 300 gemäß dem zweiten Ausführungsbeispiel der vorliegenden Erfindung der zweite Anschluss NIN an dem ersten Wellenleiterende 162 des Wellenleiters 160 nicht direkt, sondern über eine zweite geschaltete Stromregelschaltung 310 mit dem Bezugspotential GND verbunden. Die zweite geschaltete Stromregelschaltung 310 umfasst hierbei einen n-Kanal MOS-Feldeffekttransistors 320 vom Anreicherungstyp, dessen Drain-Source-Strecke von dem zu regelnden Strom durchflossen wird. Parallel zu der Drain-Source-Strecke des n-Kanal MOS-Feldeffekttransistors 320 ist eine Schutzdiode 322 geschaltet, die eine Zerstörung des Transistors bei negativen Spannungsspitzen verhindert. Zwischen den Source-Anschluss des n-Kanal MOS-Feldeffekttransistors 320 und den Bezugspotential GND ist weiterhin ein Widerstand 324 geschaltet, der als Rückkopplungswiderstand verbesserte Regeleigenschaften mit sich bringt. Der Gate-Anschluss des n-Kanal MOS-Feldeffekttransistors 320 ist mit einer Spannungsquelle 326 gekoppelt, die ausgelegt ist, um den n-Kanal MOS-Feldeffekttransistor 320 wahlweise in einen Betriebszustand zu bringen, in dem dieser die Funktion eines Stromreglers übernimmt, oder in einen hochohmigen Zustand zu schalten. Ist der n-Kanal MOS-Feldeffekttransistor 320 als Stromregler wirksam, so kann über sein Gate-Potential (bezogen auf das Bezugspotential GND) die Größe des zu liefernden Stroms eingestellt werden. Vorauszusetzen ist hierbei freilich, dass aufgrund der vorliegenden Betriebsspannungen bzw. der Wellenleiterimpedanz der gewünschte Stromfluss auch praktisch erzielbar ist.

Durch den Einsatz der zweiten geschalteten Stromregelschaltung wird es ermöglicht, den Stromfluss durch den Wellenleiter auch in einem stationären Betriebszustand auf einem gewünschten Wert zu halten. Die zweite Stromregelschaltung 310 ergänzt insofern die Drossel 110. Die Drossel 110 nämlich weist einen stetigen Stromverlauf auf, so dass sie nach dem Deaktivieren der ersten geschalteten Stromregelschaltung 120 den zuletzt fließenden Strom in den Wellenleiter 160 einprägt. Ohne eine zusätzliche zweite geschaltete Stromregelschaltung 310 würde sich dann der Stromfluss stetig verringern, gemäß der Gesetzmäßigkeit di_{L}/dt=1/L*u_{L}.

Solange über den Anschlüssen PIN, NIN an dem ersten Wellenleiterende 162 eine hohe Spannung anliegt, die größer ist als die Spannung der Spannungsquelle 140, nimmt der Stromfluss durch die Drossel 110 und damit auch durch den Wellenleiter 160 kontinuierlich ab. Die Geschwindigkeit der Abnahme ist proportional zu dem Betrag der über der Drossel 110 abfallenden Spannung und umgekehrt proportional zu der Größe der Induktivität der Drossel 110. Ist die Drossel 110 groß genug, d.h. die Induktivität der Drossel ausreichend, so ist die Abnahme des Stromes hinreichend langsam und nicht störend. Sobald die Spannung über den Anschlüssen PIN, NIN an dem ersten Wellenleiterende 162 so stark abgenommen hat, dass sie kleiner als die Spannung der Spannungsquelle 140 ist, kann die zweite geschaltete Stromregelschaltung 310 aktiv werden und die über die Drossel 110 abfallende Spannung beeinflussen. Eine Beeinflussung der über der Drossel 110 abfallenden Spannung ermöglicht eine Steuerung des Stromflusses durch die Drossel, so dass effektiv eine Stromregelung erzielt werden kann. Somit kann ein Stromfluss durch den Wellenleiter 160 mit einem näherungsweise konstanten Wert praktisch beliebig lange aufrechterhalten werden. Es kann zweckmäßig sein, die Steuerung des zweiten Schalters 130 in eine Strom-Regelung mit einzubeziehen.

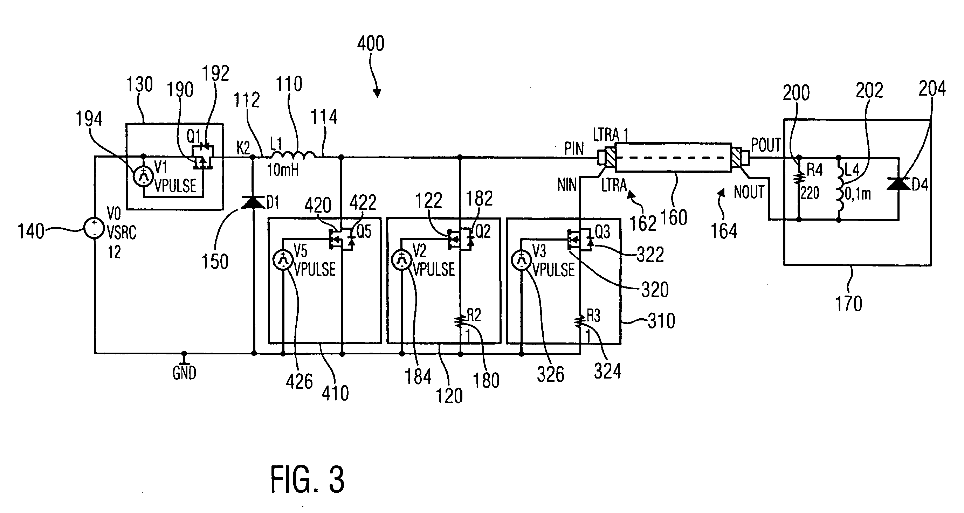

Fig. 3 zeigt ein Schaltbild einer erfindungsgemäßen Wellenleitertreiberschaltung gemäß einem dritten Ausführungsbeispiel der vorliegenden Erfindung. Die Wellenleitertreiberschaltung gemäß dem dritten Ausführungsbeispiel der vorliegenden Erfindung ist in ihrer Gesamtheit mit 400 bezeichnet und stellt eine Weiterentwicklung der vorher beschriebenen Wellenleitertreiberschaltungen 100 bzw. 300 dar. Dementsprechend werden schon vorher beschriebene Einrichtungen hier nicht mehr näher erläutert und sind mit den gleichen Bezugszeichen gekennzeichnet wie bei den Wellenleitertreiberschaltungen 100 bzw. 300.

Die Wellenleitertreiberschaltung 400 gemäß dem dritten Ausführungsbeispiel der vorliegenden Erfindung ist gegenüber der Wellenleitertreiberschaltung 300 gemäß dem zweiten Ausführungsbeispiel der vorliegenden Erfindung um einen dritten Schalter 410 ergänzt, der zwischen den zweiten Anschluss 114 der Drossel 110 und das Bezugspotential GND geschaltet ist. Der dritte Schalter 410 umfasst einen n-Kanal MOS-Feldeffekttransistor 420 vom Anreicherungstyp, dessen Drain-Source-Strecke zwischen dem zweiten Anschluss 114 der Drossel 110 und dem Bezugspotential GND liegt. Der Drain-Source-Strecke des n-Kanal MOS-Feldeffekttransistors 420 parallel geschaltet ist eine Schutzdiode 422. Es sollte ferner darauf hingewiesen werden, dass der dritte Schalter 410, anders als die erste geschaltete Stromregelschaltung 320, bevorzugterweise keinen Widerstand umfasst, der von dem Hauptstrom durchflossen wird. Der Gate-Anschluss des n-Kanal MOS-Feldeffekttransistors 420 wird von einer geschalteten Spannungsquelle 426 angesteuert, die ausgelegt ist, um den Kanal des n-Kanal MOS-Feldeffekttransistors 420 wahlweise in einen hochohmigen oder einen niederohmigen Zustand zu versetzen. Aufgabe des dritten Schalters 410 ist es, einen Stromkreis, der von der Drossel 110, der Diode 150 und dem dritten Schalter 410 gebildet wird, möglichst niederohmig, d.h. mit möglichst geringen Verlusten, zu schließen. Sind nämlich die Pausen zwischen zwei Strompulsen in dem Wellenleiter nur kurz, dann muss während der Pausenzeit der Strom in der Drossel 110 nicht vollständig neu aufgebaut werden. Vielmehr ist es vorteilhaft, wenn der Strom durch die Drossel 110 während der Pausen auf einem möglichst hohen Niveau erhalten wird. Damit der Strom in der Drossel möglichst lange erhalten bleibt, muss der Spannungsabfall u_{L} über der Drossel in den Pausenzeiten möglichst gering sein, wie aus dem Zusammenhang di_{L}/dt=1/L*u_{L} erkennbar ist. Da die Freilaufdiode 150 bereits einen merklichen Spannungsabfall von etwa 0,3 Volt bis 1,0 Volt verursacht, ist es vorteilhaft, einen Spannungsabfall über dem von dem n-Kanal MOS-Feldeffekttransistor 122 und der Schutzdiode 182 gebildeten Schalter und dem Widerstand 184 zu vermeiden. Zu diesem Zweck kann in die Wellenleitertreiberschaltung 300 bevorzugterweise ein Schalter eingefügt werden, der aus dem n-Kanal MOS-Feldeffekttransistor 420 und der dazu gehörigen Schutzdiode 422 besteht. Dieser dritte Schalter, der zusammen mit der zugehörigen Steuerspannungsquelle 426 mit 410 bezeichnet ist, verursacht bevorzugterweise nur einen geringen Spannungsabfall von einigen Millivolt.

Die Aufrechterhaltung des Stromflusses durch die Drossel 110 während Pausenzeiten, in denen der Wellenleiter 160 im Wesentlichen stromlos ist, sowie insbesondere die Einführung eines dritten Schalters 410, der geringere Verluste aufweist als die erste geschaltete Stromregelschaltung 120, kann in einer merklichen Reduktion der von der Schaltung 400 benötigten Leistung resultieren. Es tragen also sowohl das Konzept, den Stromfluss in der Induktivität aufrechtzuerhalten, als auch eine verlustarme Auslegung des dazu benötigten Stromkreises zu einer Verbesserung des elektrischen Wirkungsgrades der erfindungsgemäßen Schaltung bei.

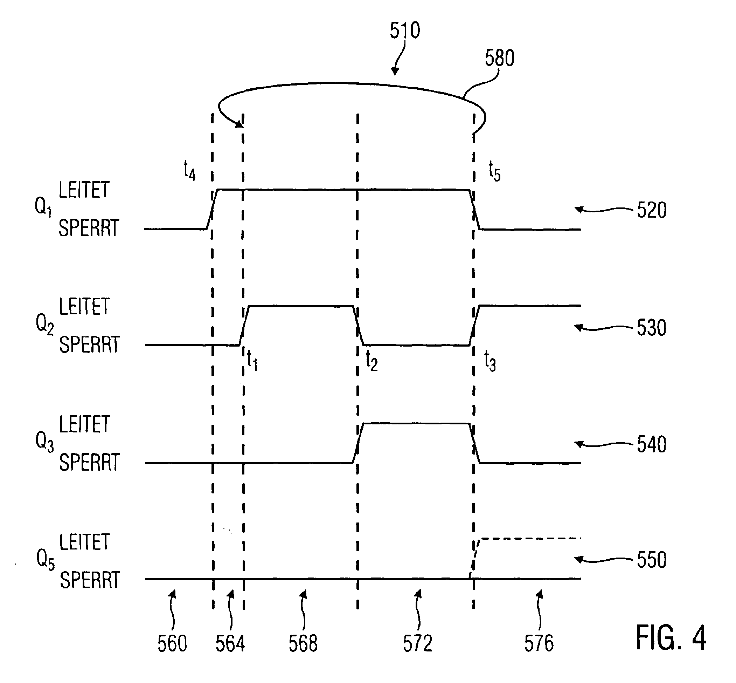

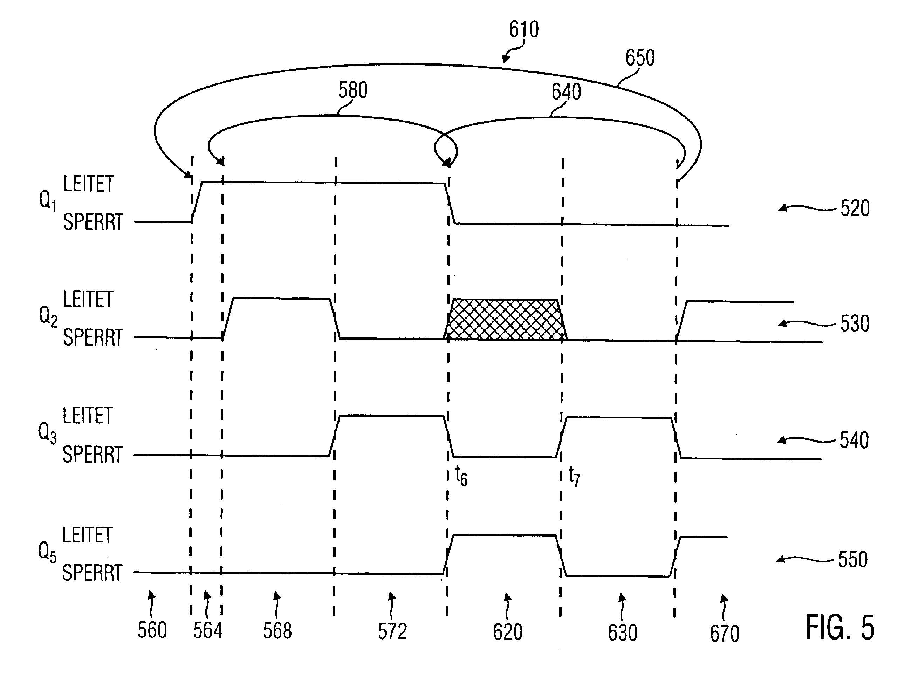

Im Folgenden werden Bezug nehmend auf die Figuren 4 und 5 die zeitlichen Abläufe bei dem Betrieb einer erfindungsgemäßen Wellenleitertreiberschaltung 400 gemäß dem dritten Ausführungsbeispiel der vorliegenden Erfindung näher erläutert. Fig. 4 zeigt eine zeitliche Darstellung der Schaltverläufe für einen Betrieb ohne Stromerhaltungszyklus bei einer erfindungsgemäßen Wellenleitertreiberschaltung 400 gemäß dem dritten Ausführungsbeispiel der vorliegenden Erfindung. Die Schaltverläufe sind in ihrer Gesamtheit mit 510 bezeichnet. Sie können bevorzugterweise durch eine Steuereinrichtung kontrolliert sein, die entsprechende Steuerspannungen für die Schaltelemente bzw. Gate-Potentiale für die MOS-Feldeffekttransistoren 122,190,320,420 bereitstellt. Die Steuerspannungsquellen 184,194,326,426 können somit als Teil einer Steuereinrichtung angesehen werden, die die anhand der Fig. 4 und 5 beschriebenen Abläufe erzeugt.

Eine erste zeitliche Darstellung 520 zeigt den Schaltzustand eines Schaltelements Q1, das in einer Schaltungsanordnung 400 dem p-Kanal MOS-Feldeffekttransistor 190 in Verbindung mit der zugehörigen Schutzdiode 192 entspricht. In anderen Worten, die erste zeitliche Darstellung zeigt den Schaltverlauf des zweiten Schalters 130. Angetragen ist hierbei, ob der entsprechende Schalter 130 bzw. der zugehörige Schalttransistor 190 sich in einem leitenden oder sperrenden Zustand befindet.

In ähnlicher Weise zeigt die zweite zeitliche Darstellung 530 den Schaltzustand eines mit Q2 bezeichneten Schalters. Der Schalter Q2 entspricht dem n-Kanal MOS-Feldeffekttransistor 122 in der ersten geschalteten Stromregelschaltung 120 einschließlich der zugehörigen Schutzdiode 182. Sperrt der Schalter Q2, so liefert die erste geschaltete Stromregelschaltung 120 keinen bzw. nur einen vernachlässigbaren Strom. Hingegen ermöglicht die erste geschaltete Stromregelschaltung 120 bei leitendem Schaltelement Q2 eine Regelung des Stromflusses. Die Größe des geregelten Stromflusses für einen leitenden Zustand von Q2 ist von der von der Steuerspannungsquelle 184 gelieferten Spannung abhängig.

Eine dritte zeitliche Darstellung 540 beschreibt den Schaltzustand eines Schaltelements Q3, welches dem n-Kanal MOS-Feldeffekttransistor 320 in Verbindung mit der zugehörigen Schutzdiode 322 entspricht. Das dritte Schaltelement Q3 ist Teil der zweiten geschalteten Stromregelschaltung 310. Falls das Schaltelement Q3 bzw. der n-Kanal MOS-Feldeffekttransistor 320 leitet, so liefert die zweite geschaltete Stromregelschaltung 310 einen Strom, dessen Größe im Wesentlichen von der von der Steuerspannungsquelle 326 gelieferten Spannung abhängt. Sperrt das Schaltelement Q3 bzw. der n-Kanal MOS-Feldeffekttransistor 320, so kann nur ein sehr geringer Strom durch die zweite geschaltete Stromregelschaltung 310 fließen. Es ist somit der Stromfluss in das erste Wellenleiterende 162 unterbrochen.

Eine vierte zeitliche Darstellung 550 zeigt einen Schaltzustand eines Schaltelements Q5, das bei der Wellenleiterschaltung 400 gemäß dem dritten Ausführungsbeispiel der vorliegenden Erfindung durch den n-Kanal MOS-Feldeffekttransistor 420 in Kombination mit der zugehörigen Schutzdiode 422 gebildet ist. Weist die zeitliche Darstellung darauf hin, dass Q5 leitet, so bedeutet dies, dass sich der Kanal des n-Kanal MOS-Feldeffekttransistors 420 in einem niederohmigen Zustand befindet, während er sich anderenfalls in einem hochohmigen Zustand befindet. Die jeweiligen Zustände des Leitens bzw. Sperrens werden durch die von der Steuerspannungsquelle 426 gelieferte Spannung festgelegt.

Die zeitliche Darstellung 510 zeigt die bei einem Betrieb einer Wellenleiterschaltung 400 auftretende Schaltzustände, wobei ein möglicher Stromerhaltungszyklus noch nicht berücksichtigt ist. Im zeitlichen Verlauf sind fünf Zustände erkennbar. In dem Anfangszustand 560 ist die gesamte Schaltungsanordnung energielos. Alle Schaltelemente Q1, Q2, Q3 und Q5 sind in einem sperrenden Zustand. Entsprechend liefern die erste geschaltete Stromregelschaltung 120 und die zweite geschaltete Stromregelschaltung 310 keinen Strom, und der zweite Schalter 130 sowie der dritte Schalter 410 sind geöffnet.

Auf den Anfangszustand folgt ein Einschaltzustand 564. In diesem ist lediglich das Schaltelement Q1 in einem leitenden Zustand. Entsprechend ist der zweite Schalter 130 in der Wellenleitertreiberschaltung 400 geschlossen. Es kann allerdings noch kein Strom fließen, da die übrigen Schalter bzw. die geschalteten Stromregelschaltungen 120, 310 noch inaktiv sind.

Auf den Einschaltzustand 564 folgt ein Stromaufbauzustand 568. In diesem leitet das erste Schaltelement Q1 sowie das zweite Schaltelement Q2. Die Drossel 110 ist somit über den zweiten Schalter 130 sowie die erste geschaltete Stromregelschaltung 120 mit der Spannungsquelle 140 gekoppelt. Die erste geschaltete Stromregelschaltung 120 ist in einem Betriebszustand, in dem sie eine Stromregelung ausführt. Es wird somit in dem Stromaufbauzustand ein Strom in der Drossel 110 aufgebaut, wobei die erste geschaltete Stromregelschaltung 120 bestehend aus dem zweiten Schaltelement Q2 (n-Kanal MOS-Feldeffekttransistor 122; Schutzdiode 182) und dem Widerstand 180 den Strom in Abhängigkeit von der Spannung der Steuerspannungsquelle 184 regelt.

Ist ein gewünschter Stromfluss durch die Drossel erreicht oder eine vorgegebene Zeitdauer abgelaufen, so geht die Schaltung in einen Stromübernahmezustand 572 über. Während das Schaltelement Q1 weiterhin in einem leitenden Zustand verbleibt, d.h. der Schalter 130 geschlossen ist, ist das zweite Schaltelement Q2 und damit auch die erste geschaltete Stromregelschaltung 120 nun in einem gesperrten Zustand. Die zweite geschaltete Stromregelschaltung 310 hingegen ist in dem Stromübernahmezustand 572 aktiv, d.h. so angesteuert, dass sie eine Stromregelung bewirkt. Das fünfte Schaltelement Q5 ist weiterhin ausgeschaltet. In diesem Betriebszustand wird der Strom durch die Drossel 110 in den Wellenleiter 160 übernommen. Ein Stromkreis wird über den zweiten Schalter 130, den Wellenleiter 160, den Wellenleiterabschluss 170, die zweite Stromregelschaltung 310 sowie die Spannungsquelle 140 geschlossen. Eine Regelung des Stromflusses erfolgt durch die zweite Stromregelschaltung 310, wobei die Größe des geregelten Stromflusses durch die Eigenschaften des n-Kanal MOS-Feldeffekttransistors 320, den Widerstands 324 und die von der Steuerspannungsquelle 326 gelieferte Spannung festgelegt wird. Idealerweise ist die Stromregelung so ausgelegt, dass der geregelte Strom gleich dem von der Drossel 110 zu dem Umschaltzeitpunkt von dem Stromaufbauzustand zu dem Stromübernahmezustand eingeprägten Strom ist.

In einem Ausschaltbetriebszustand 576 schließlich wird das erste Schaltelement Q1 in einem sperrenden Zustand versetzt, wodurch der zweite Schalter 130 sperrt. Auch die zweite geschaltete Stromregelschaltung 310 wird deaktiviert. Ein Stromfluss durch die Drossel 110 wird über die erste geschaltete Stromregelschaltung 120 und die Freilaufdiode 150 abgebaut, wobei die Größe des Stromes im Wesentlichen durch den n-Kanal MOS-Feldeffekttransistor 122, den Widerstand 180 und die Spannung der Steuerspannungsquelle 184 festgelegt wird. Die in der Drossel 110 gespeicherte Energie erzeugt dabei eine Verlustleistung in den beteiligten Elementen, also insbesondere in dem n-Kanal MOS-Feldeffekttransistor 122, dem Widerstand 184 und der Diode 150. Bei Bedarf kann auch das Schaltelement Q5 in einen leitenden Zustand versetzt werden, so dass der dritte Schalter 410 leitet.

Weiterhin ist anzumerken, dass die Stromaufbauphase 568 und die Stromübernahmephase 572 zusammen mehrfach wiederholt werden können, wie durch den Wiederholungspfeil 580 angedeutet ist. Damit können mehrere Stromimpulse in dem Wellenleiter 160 erzeugt werden, bevor der Strom in der Induktivität in der Ausschaltphase 576 abgebaut wird. Durch ein solches Vorgehen erhöht sich der elektrische Wirkungsgrad einer erfindungsgemäßen Wellenleitertreiberschaltung 400.

Fig. 5 zeigt eine zeitliche Darstellung der Schaltverläufe für einen Betrieb mit Stromerhaltungszyklus bei einer erfindungsgemäßen Wellenleiterschaltung 400 gemäß dem dritten Ausführungsbeispiel der vorliegenden Erfindung. Die zeitliche Darstellung ist in ihrer Gesamtheit mit 610 bezeichnet. Da die hier gezeigten Zeitabläufe eine Weiterentwicklung der anhand von Fig. 4 gezeigten Zeitabläufe darstellen, sind in Fig. 5 entsprechende zeitliche Verläufe und Zustände mit gleichen Bezugszeichen bezeichnet wie in Fig. 4. Daher wird hier auf eine wiederholte Beschreibung verzichtet.

Es sei lediglich darauf hingewiesen, dass der energielose Ausgangszustand 560, der Einschaltzustand 564, der Stromaufbauzustand 568 und der Stromübernahmezustand 572 bei dem hier gezeigten Ablaufschema in gleicher Art und Reihenfolge durchgeführt werden wie bei dem anhand von Fig. 4 beschriebenen Zeitablauf. Auf den Stromübernahmezustand 572 folgt bei dem vorliegenden Ablaufschema ein Stromerhaltungszustand 620. In diesem Zustand ist das erste Schaltelement Q2 gesperrt, so dass auch der zweite Schalter 130 sperrt. Dadurch ist die Schaltung von der Spannungsquelle 140 abgetrennt. Auch die zweite geschaltete Stromregelschaltung 310 ist inaktiv, so dass ein Stromfluss an dem ersten Wellenleiterende 162 unterbrochen ist. Das fünfte Schaltelement Q5 jedoch befindet sich in einem leitenden Zustand. In anderen Worten, der n-Kanal MOS-Feldeffekttransistor 420 ist in einem niederohmigen Zustand, und der dritte Schalter 410 ist somit geschlossen. Optional kann weiterhin das zweite Schaltelement Q2 in einem leitfähigen Zustand sein, so dass auch die erste geschaltete Stromregelschaltung 120 zu einem Stromfluss beiträgt. Es ist somit über die Drossel 110, den dritten Schalter 410 und die Diode 150 sowie ggf. über die erste geschaltete Stromregelschaltung 120 ein Stromkreis geschlossen, der es ermöglicht, dass die Drossel 110 ihren Stromfluss im Wesentlichen erhält. Die in dem dritten Schalter 410 bzw. dem n-Kanal MOS-Feldeffekttransistor 420 sowie in der Diode 150 auftretenden Verluste sind bevorzugterweise gering. Damit bleibt nicht nur der Stromfluss durch die Drossel 110 im Wesentlichen erhalten, sondern auch die in der Drossel gespeicherte Energie. Je geringer der Spannungsabfall über dem dritten Schalter 410 und der Diode 150 ist, desto geringer ist der Energieverlust.

Auf den Stromerhaltungszustand 620 folgt ein energiesparender Stromübernahmezustand 630, der im Wesentlichen dem Stromübernahmezustand 572 entspricht. Allerdings ist in dem energiesparenden Stromübernahmezustand 630 der zweite Schalter 130 geöffnet. Somit wird der Spannungsquelle 140 keine Energie entnommen. Der Stromkreis ist vielmehr über die Freilaufdiode 150 geschlossen.

Sollen mehrere Stromimpulse an den Wellenleiter 160 ausgegeben werden, und ist die Drossel 110 ausgelegt, um eine genügend große Energie zu speichern, so können der Stromerhaltungszustand 620 und der energiesparende Stromübernahmezustand 630 mehrfach wiederholt werden, solange die Drossel 110 genügend Energie enthält. Diese mögliche Wiederholung ist durch den Wiederholungspfeil 640 angedeutet. Wurde der energiesparende Stromübernahmezustand 630 so oft wiederholt, dass die Drossel 110 nicht mehr genügend Energie enthält, so kann der Zeitablauf mit einem Stromaufbauzustand 568 fortgesetzt werden. Auch diese Wiederholung im Zeitablauf, die durch einen Wiederholungspfeil 650 angedeutet ist, kann je nach Anwendung ein oder mehrmals durchlaufen werden oder auch ganz entfallen.

Es sei hiermit zur Klarheit nochmals darauf hingewiesen, dass die durch die Wiederholungspfeile 580, 640, 650 angedeuteten Wiederholungen jeweils ein oder mehrmals durchlaufen werden können oder auch ganz entfallen können.

Der gezeigte Zeitablauf wird durch einen Ausschaltzustand 670 vervollständigt, in dem der Strom über den dritten Schalter oder die erste geschaltete Stromregelschaltung 120 abgebaut wird.

Durch die Einfügung eines Stromerhaltungszustands 620 und eines energiesparenden Stromübernahmezustands 630, bei denen die Spannungsquelle 140 jeweils nicht belastet wird, ist ein besonders energiesparender Betrieb der Wellenleitertreiberschaltung 400 möglich. Insbesondere trägt zur Energieeinsparung das Vorhandensein eines verlustarmen dritten Schalters 410 mit einem Schaltelement Q5 bei.

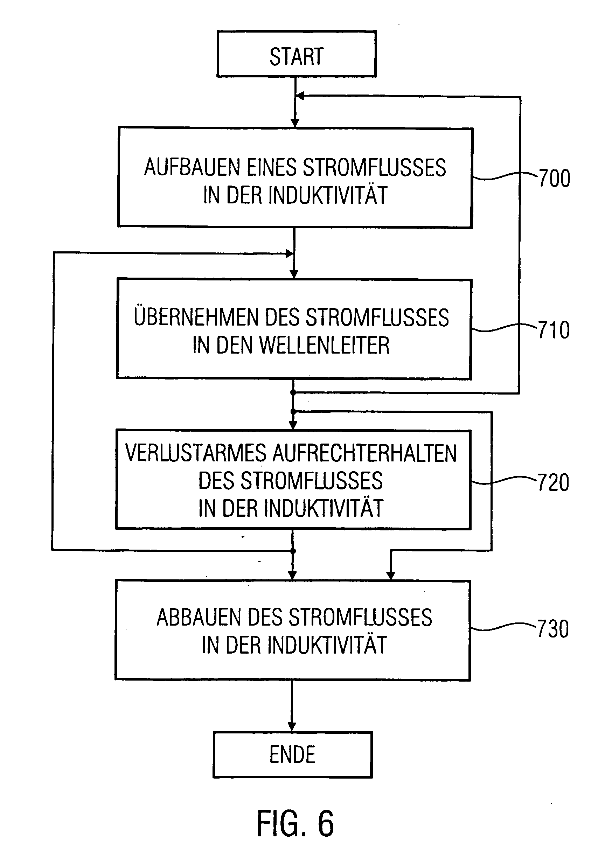

Fig. 6 zeigt ein Flussdiagramm eines erfindungsgemäßen Verfahrens zum Bereitstellen eines Strompulses in einem Wellenleiter gemäß einem Ausführungsbeispiel der vorliegenden Erfindung. Für die Durchführung eines erfindungsgemäßen Verfahrens wird davon ausgegangen, dass eine Induktivität, z. B. eine Drosselspule, zur Verfügung steht, die mit einem Wellenleiter so koppelbar ist, dass ein Stromfluss durch die Koppelspule in den Wellenleiter übernommen werden kann. Ferner wird davon ausgegangen, dass es möglich ist, einen Stromfluss in der Induktivität aufzubauen. Auch sei eine geeignete Anordnung vorhanden, um einen Stromfluss durch die Induktivität aufrechtzuerhalten.

Entsprechend dem erfindungsgemäßen Verfahren zum Erzeugen eines Strompulses in einem Wellenleiter wird in einem ersten Schritt 700 ein Stromfluss in der Induktivität aufgebaut. Zu diesem Zweck kann die Induktivität beispielsweise mit einer Gleichspannungsquelle verbunden sein. Das Aufbauen des Stromflusses kann bevorzugterweise beendet werden, wenn eine vorgehende Zeitdauer abgelaufen ist oder wenn der Stromfluss durch die Induktivität einen gewünschten Wert erreicht hat. Das Aufbauen des Stromflusses kann ebenso ein Regeln des Stromflusses umfassen. Weiterhin ist es möglich, dass das Aufbauen des Stromflusses durch ein Einstellen eines gewünschten Stromflusses ersetzt ist, wobei es möglich ist, dass der Stromfluss reduziert wird, falls zu dem Anfang des Schritts ein größerer Stromfluss durch die Induktivität vorherrscht als benötigt wird.

In einem zweiten Schritt 710 wird der Stromfluss durch die Induktivität, der in dem ersten Schritt 700 aufgebaut wurde, in den Wellenleiter übernommen. Dies kann beispielsweise durch geeignete Einstellung einer Schalteinrichtung erfolgen. Das Übernehmen des Stromflusses kann das Öffnen eines bestehenden Stromkreises sowie das Schließen eines neuen Stromkreises umfassen. Durch die Eigenschaft der Induktivität, einen Stromfluss aufrechtzuerhalten, wird der in dem ersten Schritt 700 aufgebaute Stromfluss somit in den Wellenleiter eingeprägt. Bei geeignet großer Auslegung der Induktivität nimmt der Stromfluss dann auch nur langsam ab.

In einem weiteren optionalen Schritt kann der Stromfluss für eine vorgegebene Zeitdauer aufrechterhalten werden. Dieser Schritt kann auch das Regeln des Stromflusses durch den Wellenleiter umfassen. Ebenso können eine oder mehrere Umschaltvorgänge erfolgen, um beispielsweise andere Induktivitäten zu- oder abzuschalten.

Wurde der Stromfluss durch den Wellenleiter für eine vorgegebene Zeitdauer aufrechterhalten, so gibt es verschiedene Möglichkeiten, den Ablauf fortzusetzen. So ist es möglich, dass der erste Schritt 700 des Aufbauens eines Stromflusses in der Induktivität wiederholt wird. Dadurch ist es möglich, weitere Strompulse in dem Wellenleiter zu erzeugen, auch wenn die in der Induktivität gespeicherte Energie bereits stark abgefallen ist. Folgend auf das Übernehmen 710 des Stromflusses in den Wellenleiter kann weiterhin ein dritter Schritt 720 des verlustarmen Aufrechterhaltens des Stromflusses in der Induktivität ausgeführt werden. Ebenso ist es möglich, nach dem Übernehmen des Stromflusses in den Wellenleiter den Stromfluss in der Induktivität in einem Schritt 730 abzubauen und dann das erfindungsgemäße Verfahren zu beenden.

Das verlustarme Aufrechterhalten 720 des Stromflusses in der Induktivität kann beispielsweise ein Schließen eines Stromkreises umfassen, durch den gewährleistet ist, dass die über der Induktivität abfallende Spannung hinreichend nahe bei Null gehalten wird. Bei einem bevorzugten Ausführungsbeispiel kann das verlustarme Aufrechterhalten des Stromflusses in der Induktivität auch ein Überbrücken der Induktivität umfassen.

Im Anschluss an das verlustarme Aufrechterhalten 720 des Stromflusses in der Induktivität kann wiederum in einem weiteren Schritt 710 der Stromfluss in den Wellenleiter übernommen werden. Ebenso ist es möglich, den Stromfluss in einem Schritt 730 abzubauen.

Dieser Schritt 730 kann beispielsweise ein Rückführen der in der Induktivität gespeicherten Energie in eine Quelle umfassen. Dadurch kann ein verlustarmer Betrieb gewährleistet werden. Ebenso kann das Abbauen des Stromflusses aber auch ein Dissipieren der in der Induktivität gespeicherten Energie umfassen.

Wie in dem Flussdiagramm gemäß Fig. 6 angegeben, können einzelne Schritte oder Kombinationen von Schritten mehrmals wiederholt werden. Eine Wiederholung ist jedoch nicht notwendig. Im Übrigen wird darauf hingewiesen, dass die Reihenfolge der Schritte verändert werden kann, solange sichergestellt ist, dass ein Stromfluss in den Wellenleiter übernommen wird.

Die vorliegende Erfindung schafft somit eine Schaltungsanordnung und ein Verfahren, mit denen es möglich ist, aus einer bereits vorhandenen niedrigen Versorgungsspannung mittels geeigneter Energiespeicher einen Strompuls zu erzeugen. Die erfindungsgemäße Wellenleitertreiberschaltung weist gegenüber dem Stand der Technik eine große Zahl von Vorteilen auf. So kann ein Strompuls aus einer Kleinspannungsquelle erzeugt werden, die für die restliche Elektronik in einem komplexeren System sowieso benötigt wird. Somit wird für die Erzeugung eines Strompulses eine zusätzliche (Hoch-) Spannungsquelle, die eine Spannung von mehreren 100 Volt aufweist, nicht benötigt. Der Aufwand zur Realisierung einer Schaltung, die einen Strompuls liefern kann, wird dadurch erheblich reduziert. So kann beispielsweise auf teuere und volumenmäßig große Transformatoren verzichtet werden.

Durch den Abschluss an dem Ende des Wellenleiters mit drei parallelen Elementen Widerstand, Induktivität und Freilaufdiode wird die Verlustleistung der Anordnung deutlich reduziert, da die Induktivität 202 einen festgelegten Strom bei geringerer Spannung führen kann, als dies bei Verwendung eines Abschlusswiderstandes 200 allein möglich wäre. Die Abschlussdiode 204, die als Freilaufdiode für die Abschlussinduktivität 202 dient, ermöglicht weiterhin ein sehr abruptes Abschalten des Stromes in dem Wellenleiter.

Werden die Shunt-Widerstände 184, 324 weggelassen, dann kann der zu einem Endzeitpunkt erreichte Strom in der Drossel über die Zeit gesteuert werden, in der der Strom in der Drossel 110 aufgebaut wird. Dies funktioniert allerdings nur dann definiert, wenn sichergestellt ist, dass zu Beginn eines Zyklus ein definierter Strom in der Drossel 110 fließt. Durch eine solche Auslegung können Schaltungsaufwand und Verlustleistung einer erfindungsgemäßen Wellenleitertreiberschaltung verringert werden.

Wenn der Strompuls nur für kurze Zeit, beispielsweise nur für einige Mikrosekunden, in den Wellenleiter gespeist werden muss, dann kann die zweite geschaltete Stromregelschaltung, bestehend aus dem n-Kanal MOS-Feldeffekttransistor 320 inklusiv Schutzdiode 322, dem Widerstand 324 und der Steuerspannungsquelle 326, auch weggelassen werden. Die Drossel 110 alleine sorgt in diesem Fall für einen hinreichend konstanten Strom. Eine solche vereinfachte Schaltung ist in Fig. 1 gezeigt.

Weiterhin kann die erfindungsgemäße Schaltung dadurch verbessert werden, dass der Spannungsabfall über der Drossel 110 durch einen dritten Schalter 410 mit einem n-Kanal MOS-Feldeffekttransistor 420 als Schaltelement in den Pausenzeiten, in denen kein Strom in den Wellenleiter eingeprägt wird, gering gehalten wird. Damit kann eine weitere Reduktion der Verlustleistung erzielt werden.

Die erfindungsgemäße Schaltungsrealisierung zeigt somit eine große Vielzahl an Merkmalen, mit deren Hilfe die Einprägung eines Stromes in einen Wellenleiter gegenüber herkömmlichen Schaltungen deutlich verbessert werden kann. Neben der Verringerung des Schaltungsaufwands, insbesondere im Hinblick auf die notwendige Spannungsversorgung, ist auch die Reduzierung der Verlustleistung ein entscheidender Vorteil einer erfindungsgemäßen Schaltungsauslegung.

## Patentansprüche

1. Wellenleitertreiberschaltung (100; 300; 400) zum Erzeugen eines Strompulses in einem Wellenleiter (160), mit folgenden Merkmalen:
einer Spannungsquelle (140) zum Liefern einer Gleichspannung;
einer Drossel (110), deren erster Anschluss (112) mit einem ersten Anschluss der Spannungsquelle (140) gekoppelt ist;
einem ersten Schalter (120), dessen erster Anschluss mit einem zweiten Anschluss (114) der Drossel (110) gleichstrommäßig gekoppelt ist, und dessen zweiter Anschluss mit einem zweiten Anschluss der Spannungsquelle (140) gekoppelt ist;
dem Wellenleiter (160), dessen erster Anschluss (PIN) an einem ersten Wellenleiterende (162) mit dem ersten Anschluss des ersten Schalters (120) gekoppelt ist, und dessen zweiter Anschluss (NIN) an dem ersten Wellenleiterende (162) mit dem zweiten Anschluss der Spannungsquelle (140) gekoppelt ist; und
einer Steuereinrichtung, die ausgelegt ist, um den ersten Schalter (120) zu öffnen und zu schließen, um an den Anschlüssen (PIN, NIN) des Wellenleiters an dem ersten Wellenleiterende (162) einen Strompuls zu erzeugen,
wobei die Wellenleitertreiberschaltung so ausgelegt ist, dass zu einem Umschaltzeitpunkt, an dem der erste Schalter von einem leitenden in einen hochohmigen Zustand versetzt wird, ein in den Wellenleiter eingeprägter Strom gleich einem unmittelbar vor dem Umschalten durch die Drossel fließenden Strom ist.

2. Wellenleitertreiberschaltung (100; 300; 400) gemäß Anspruch 1, bei der der Wellenleiter (160) Teil einer Anordnung zur magnetostriktiven Positionsmessung ist.

3. Wellenleitertreiberschaltung (100; 300; 400) gemäß Anspruch 1 oder 2, bei der ein Wellenleiterabschluss (170), der mit einem ersten Anschluss (POUT) des Wellenleiters (160) an einem zweiten Wellenleiterende (164) und einem zweiten Anschluss (NOUT) des Wellenleiters (160) an dem zweiten Wellenleiterende (164) gekoppelt ist, durch eine Parallelschaltung eines Abschlusswiderstands (200) und einer Abschlussinduktivität (202) gebildet ist.

4. Wellenleitertreiberschaltung (100; 300; 400) gemäß Anspruch 3, bei der der Abschlussinduktivität (202) des Wellenleiterabschlusses (170) eine Diode (204) parallel geschaltet ist, die so ausgelegt ist, dass sie bei einem Ausschaltvorgang, bei dem ein Stromfluss an dem ersten Wellenleiterende (162) des Wellenleiters (160) unterbrochen wird, einen Strom aufnimmt, der von der Abschlussinduktivität (202) geliefert wird.

5. Wellenleitertreiberschaltung (100; 300; 400) gemäß einem der Ansprüche 1 bis 4, bei der der erste Schalter (120) Teil einer ersten geschalteten Stromregelschaltung ist, die ausgelegt ist, um in Abhängigkeit von einer von der Steuereinrichtung gelieferten Ansteuerspannung einen Stromfluss zu regeln oder zu unterbrechen.

6. Wellenleitertreiberschaltung (300; 400) gemäß einem der Ansprüche 1 bis 5, bei der der zweite Anschluss (NIN) des Wellenleiters (160) an dem ersten Wellenleiterende (162) über eine zweite geschaltete Stromregelschaltung (310) mit dem zweiten Anschluss der Spannungsquelle (140) gekoppelt ist,
wobei die zweite geschaltete Stromregelschaltung (310) ausgelegt ist, um in Abhängigkeit von einer von der Steuereinrichtung gelieferten zweiten Ansteuerspannung einen Stromfluss zu regeln oder zu unterbrechen.

7. Wellenleitertreiberschaltung (100; 300; 400) gemäß einem der Ansprüche 1 bis 6, bei der der erste Anschluss (112) der Drosselspule (110) über einen zweiten Schalter (130) mit dem ersten Anschluss der Spannungsquelle (140) gekoppelt ist, wobei der zweite Schalter (130) ausgelegt ist, um die Drossel (110) von der Spannungsquelle (140) abzutrennen, wenn keine Energiezufuhr von der Spannungsquelle (140) benötigt wird.

8. Wellenleitertreiberschaltung (100; 300; 400) gemäß einem der Ansprüche 1 bis 7, die ferner eine Diode (150) umfasst, die als Freilaufdiode zwischen den ersten Anschluss (112) der Drossel (110) und den zweiten Anschluss der Spannungsquelle (140) geschaltet ist.

9. Wellenleitertreiberschaltung (400) gemäß Anspruch 8, die ferner einen dritten Schalter (410) aufweist, der zwischen den zweiten Anschluss (114) der Drossel (110) und den zweiten Anschluss der Spannungsquelle (140) geschaltet ist, und der ausgelegt ist, um durch Schließen eines Stromkreises durch die Diode (150) und die Drossel (110) eine magnetische Feldenergie in der Drossel auf einer von Verlusten abgesehen konstanten Größe zu halten.

10. Wellenleitertreiberschaltung (100; 300; 400) gemäß einem der Ansprüche 1 bis 9, bei der der erste Schalter, der zweite Schalter, der dritte Schalter, die erste geschaltete Stromregelschaltung oder die zweite geschaltete Stromregelschaltung einen Halbleiterschalter umfassen.

11. Verfahren zum Erzeugen eines Strompulses in einem Wellenleiter, wobei der Wellenleiter mit einem Anschluss einer Induktivität gekoppelt ist, mit folgenden Schritten:
Aufbauen (700) eines Stromflusses in der Induktivität durch Schließen eines Schalters (Q2), der gleichstrommäßig mit der Induktivität gekoppelt ist; und
Übernehmen (710) des Stromflusses in den Wellenleiter durch Öffnen des Schalters,
so dass zu einem Umschaltzeitpunkt, an dem der Schalter von einem leitenden in einen hochohmigen Zustand versetzt wird, ein in den Wellenleiter eingeprägter Strom gleich einem unmittelbar vor dem Umschalten durch die Induktivität fließenden Strom ist.

12. Verfahren gemäß Anspruch 11, bei dem der Wellenleiter Teil einer Anordnung zur magnetostriktiven Positionsmessung ist.

13. Verfahren gemäß Anspruch 11 oder 12, das ferner folgenden Schritt umfasst:
verlustarmes Aufrechterhalten (720) des Stromflusses.

14. Verfahren gemäß einem der Ansprüche 11 bis 13, das ferner folgenden Schritt aufweist:
Abbauen (730) des Stromflusses in der Induktivität.

## Claims

1. Waveguide driving circuit (100; 200; 400) for generating a current pulse in a waveguide (160), comprising:
a voltage source (140) for providing a direct voltage;
a choke (110) the first terminal (112) of which is coupled to a first terminal of the voltage source (140);
a first switch (120) the first terminal of which is in direct current coupling to a second terminal (114) of the choke (110) and the second terminal of which is coupled to a second terminal of the voltage source (140);
the waveguide (160) the first terminal (PIN) of which at a first waveguide end (162) is coupled to the first terminal of the first switch (120) and the second terminal (NIN) of which at the first waveguide end (162) is coupled to the second terminal of the voltage source (140); and
a controller implemented to open and close the first switch (120) to generate a current pulse at the terminals (PIN, NIN) of the waveguide at the first waveguide end (162),
wherein the waveguide driving circuit is implemented such that at a switching time when the first switch is brought from a conducting state to a high-impedance state, a current impressed on the waveguide equals a current flowing through the choke directly before switching.

2. Waveguide driving circuit (100; 200; 400) according to claim 1, wherein the waveguide (160) is part of an assembly for magnetostrictive position measurement.

3. Waveguide driving circuit (100; 200; 400) according to claim 1 or 2, wherein a waveguide termination (170) coupled to a first terminal (POUT) of the waveguide (160) at a second waveguide end (164) and to a second terminal (NOUT) of the waveguide (160) at the second waveguide end (164) is formed by a parallel connection of a terminating resistor (200) and a terminating inductance (202).

4. Waveguide driving circuit (100; 200; 400) according to claim 3, wherein a diode (204) is connected in parallel to the terminating inductance (202) of the waveguide termination (170), the diode being implemented such that it takes up a current provided by the terminating inductance (202) in a switch-off process where a current flow is interrupted at the first waveguide end (162) of the waveguide (160).

5. Waveguide driving circuit (100; 200; 400) according to one of claims 1 to 4, wherein the first switch (120) is part of a first switched current regulating circuit implemented to regulate or interrupt a current flow in dependence on a driving voltage provided by the controller.

6. Waveguide driving circuit (300; 400) according to one of claims 1 to 5, wherein the second terminal (NIN) of the waveguide (160) at the first waveguide end (162) is coupled to the second terminal of the voltage source (140) via a second switched current regulating circuit (310),
wherein the second switched current regulating circuit (310) is implemented to regulate or interrupt a current flow in dependence on a second driving voltage provided by the controller.

7. Waveguide driving circuit (100; 200; 400) according to one of claims 1 to 6, wherein the first terminal (112) of the choke coil (110) is coupled to the first terminal of the voltage source (140) via a second switch (130), the second switch (130) being implemented to separate the choke (110) from the voltage source (140) when no energy supply from the voltage source (140) is necessary.

8. Waveguide driving circuit (100; 200; 400) according to one of claims 1 to 7, further including a diode (150) connected as a freewheeling diode between the first terminal (112) of the choke (110) and the second terminal of the voltage source (140).

9. Waveguide driving circuit (400) according to claim 8, further comprising a third switch (410) connected between the second terminal (114) of the choke (110) and the second terminal of the voltage source (140) and implemented to keep a magnetic field energy in the choke at a, except for losses, constant quantity by closing a circuit through the diode (150) and the choke (110).

10. Waveguide driving circuit (100; 200; 400) according to one of claims 1 to 9, wherein the first switch, the second switch, the third switch, the first switched current regulating circuit or the second switched current regulating circuit includes a semiconductor switch.

11. Method for generating a current pulse in a waveguide, the waveguide being coupled to a terminal of an inductance, comprising:
setting up (700) a current flow in the inductance by closing a switch (Q2) which is in direct current coupling to the inductance; and
taking over (710) the current flow to the waveguide by opening the switch,
such that at a switching time when the switch is brought from a conducting state to a high-impedance state, a current impressed on the waveguide equals a current flowing through the inductance directly before switching.

12. Method according to claim 11, wherein the waveguide is part of an assembly for magnetostrictive position measurement.

13. Method according to claim 11 or 12, further comprising the step of:
maintaining (720) the current flow in a low-loss manner.

14. Method according to one of claims 11 to 13, further comprising the step of:
reducing (730) the current flow in the inductance.

## Revendications

1. Circuit de pilotage de guide d'ondes (100; 300; 400) pour générer une impulsion de courant dans un guide d'ondes (160), aux caractéristiques suivantes:
une source de tension (140) destinée à fournir une tension continue;
une bobine d'induction (110) dont la première connexion (112) est couplée à une première connexion de la source de tension (140);
un premier commutateur (120) dont la première connexion est couplée en courant continu à une deuxième connexion (114) de la bobine d'induction (110) et dont la deuxième connexion est couplée à une deuxième connexion de la source de tension (140);
le guide d'ondes (160) dont la première connexion (PIN) à une première extrémité de guide d'ondes (162) est couplée à la première connexion du commutateur (120) et dont la deuxième connexion (NIN) à la première extrémité de guide d'ondes (162) est couplée à la deuxième connexion de la source de tension (140); et
un moyen de commande qui est conçu de manière à ouvrir et fermer le premier commutateur (120), pour générer aux connexions (PIN, NIN) du guide d'onde à la première extrémité de guide d'ondes (162) une impulsion de courant,
le circuit de pilotage de guide d'ondes étant conçu de sorte que, à un moment de commutation où le premier commutateur est déplacé d'un état conducteur à un état hautement ohmique, un courant imprimé dans le guide d'ondes soit égal à un courant circulant par la bobine d'induction immédiatement avant la commutation.

2. Circuit de pilotage de guide d'ondes (100; 300; 400) selon la revendication 1, dans lequel le guide d'ondes (160) fait partie d'un aménagement de mesure de position magnétostrictive.

3. Circuit de pilotage de guide d'ondes (100; 300; 400) selon la revendication 1 ou 2, dans lequel une terminaison de guide d'ondes (170) qui est couplée, par une première connexion (POUT) du guide d'ondes (160), à une deuxième extrémité de guide d'ondes (164) et, par une deuxième connexion (NOUT) du guide d'ondes (160), à la deuxième extrémité de guide d'ondes (164) est constituée par une connexion en parallèle d'une résistance de terminaison (200) et d'une inductance de terminaison (202).

4. Circuit de pilotage de guide d'ondes (100; 300; 400) selon la revendication 3, dans lequel est connectée en parallèle avec l'inductance de terminaison (202) de la terminaison de guide d'ondes (170) une diode (204) qui est conçue de manière qu'elle reçoive, lors d'une opération de coupure où un flux de courant à la première extrémité (162) du guide d'onde (160) est interrompu, un courant qui est fourni par l'inductance de terminaison (202).

5. Circuit de pilotage de guide d'ondes (100; 300; 400) selon l'une des revendications 1 à 4, dans lequel le premier commutateur (120) fait partie d'un premier circuit de réglage de courant connecté qui est conçu de manière à régler ou interrompre un flux de courant en fonction d'une tension d'activation fournie par le moyen de commande.

6. Circuit de pilotage de guide d'ondes (300; 400) selon l'une des revendications 1 à 5, dans lequel la deuxième connexion (NIN) du guide d'ondes (160) à la première extrémité de guide d'ondes (162) est couplée, par l'intermédiaire d'un deuxième circuit de réglage de courant connecté (310), à la deuxième connexion de la source de tension (140),
le deuxième circuit de réglage de courant connecté (310) étant conçu de manière à régler ou interrompre un flux de courant en fonction d'une deuxième tension d'activation fournie par le moyen de commande.

7. Circuit de pilotage de guide d'ondes (100; 300; 400) selon l'une des revendications 1 à 6, dans lequel la première connexion (112) de la bobine d'induction (110) est couplée, par l'intermédiaire d'un deuxième commutateur (130), à la première connexion de la source de tension (140), le deuxième commutateur (130) étant conçu de manière à couper la bobine d'induction (110) de la source de tension (140) lorsqu'il n'est pas requis d'alimentation d'énergie de la source de tension (140).

8. Circuit de pilotage de guide d'ondes (100; 300; 400) selon l'une des revendications 1 à 7, comprenant par ailleurs une diode (150) qui est connectée comme diode de récupération de self-induction entre la première connexion (112) de la bobine d'induction (110) et la deuxième connexion de la source de tension (140).

9. Circuit de pilotage de guide d'ondes (400) selon la revendication 8, présentant par ailleurs un troisième commutateur (410) qui est connecté entre la deuxième connexion (114) de la bobine d'induction (110) et la deuxième connexion de la source de tension (140) et qui est conçu de manière à maintenir, en fermant une circuit électrique par la diode (150) et la bobine d'induction (110), une énergie de champ magnétique dans la bobine d'induction à une grandeur constante à l'exception de pertes.

10. Circuit de pilotage de guide d'ondes (100; 300; 400) selon l'une des revendications 1 à 9, dans lequel le premier commutateur, le deuxième commutateur, le troisième commutateur, le premier circuit de réglage de courant connecté ou le deuxième circuit de réglage de courant connecté comportent un commutateur à semiconducteur.

11. Procédé pour générer une impulsion de courant dans un guide d'onde, le guide d'onde étant couplé à une connexion d'une inductance, aux étapes suivantes consistant à:
créer (700) un flux de courant dans l'inductance en fermant un commutateur (Q2) qui est couplé en courant continu à l'inductance; et
reprendre (710) le flux de courant dans le guide d'onde en ouvrant le commutateur,
de sorte que, à un moment où le commutateur est déplacé d'un état conducteur à un état hautement ohmique, un courant imprimé dans le guide d'ondes soit égal à un courant circulant par l'inductance immédiatement avant la commutation.

12. Procédé selon la revendication 11, dans lequel le guide d'ondes fait partie d'un aménagement de mesure de position magnétostrictive.

13. Procédé selon la revendication 11 ou 12, comportant par ailleurs l'étape suivante consistant à:
maintenir sans perte (720) le flux de courant.

14. Procédé selon l'une des revendications 11 à 13, présentant par ailleurs l'étape suivante consistant à:
éliminer (730) le flux de courant dans l'inductance.
